Europäisches Patentamt

European Patent Office

Office européen des brevets

(19)

(11) EP 1 137 252 A2

(12) EUROPEAN PATENT APPLICATION

(43) Date of publication:
26.09.2001 Bulletin 2001/39

(51) Int Cl.⁷: H04N 1/32

(21) Application number: 01200377.8

(22) Date of filing: 05.02.2001

(84) Designated Contracting States:
AT BE CH CY DE DK ES FI FR GB GR IE IT LI LU
MC NL PT SE TR
Designated Extension States:
AL LT LV MK RO SI

(30) Priority: 16.02.2000 US 504448
16.02.2000 US 504466

(71) Applicant: EASTMAN KODAK COMPANY
Rochester, New York 14650 (US)

(72) Inventor: Wen, Xin, c/o Eastman Kodak Company
Rochester, New York 14650-2201 (US)

(74) Representative:
Lewandowsky, Klaus, Dipl.-Ing. et al
Kodak Aktiengesellschaft,
Patentabteilung
70323 Stuttgart (DE)

(54) Embedding two sets of information in a digital image

(57) A method for embedding information in a digital image by an imaging device that is electronically connected to a network server includes storing a digital image having first embedded information in an electronic memory at a network server and sending the digital image having the first embedded information from the network server to the imaging device. The method further includes producing second information and using the imaging device to embed the second information in the digital image having the first embedded information to produce a digital image having the first and second embedded information.

FIG. 1

## Description

The present invention relates to embedding information in digital images.

Images can be viewed by many different types of imaging devices: they can be displayed on a monitor such as a liquid crystal display (LCD), a cathode ray tub monitor (CRT), or an organic light emitting diode display (OLED). They can be printed on reflective or transparent receivers by printers. They can also be projected onto a screen using a projector to present a static image or motion images. For many current commercial applications, the imaging devices are usually located at different sites. Modem communication tools such as the Internet allow these imaging devices to communication with each other or with a central location such as a network server. The digital images can be used to produce images on a display or print images on receivers.

In many circumstances, the digital images are protected by copyright. The copyright information can include the owner of the image. Proper identification of these images needs to be provided so that the visual or digital images can be easily traced or authenticated. In some other applications, it is very desirable to attach information to the digital image or the visual image produced therefrom.

An object of the present invention is to effectively embed at least two different sets of information in digital images. The first set of embedded information is in the digital image and is stored in a network server. The second set of information can be produced or selected by a user.

This object is achieved by a method for embedding information in a digital image by an imaging device that is electronically connected to a network server, comprising the steps of:

a) storing a digital image having first embedded information in an electronic memory at a network server;
b) sending the digital image having the first embedded information from the network server to the imaging device;
c) producing second information; and
d) using the imaging device to embed the second information in the digital image having the first embedded information to produce a digital image having the first and second embedded information.

An advantage of the present invention is that by embedding the first and second sets of information into the digital images information can be selected for different imaging devices, users, locations, and time so that each digital or visual image has specific embedded information. These sets of embedded information can be used to authenticate the digital or visual image or trace the history of the digital or visual image.

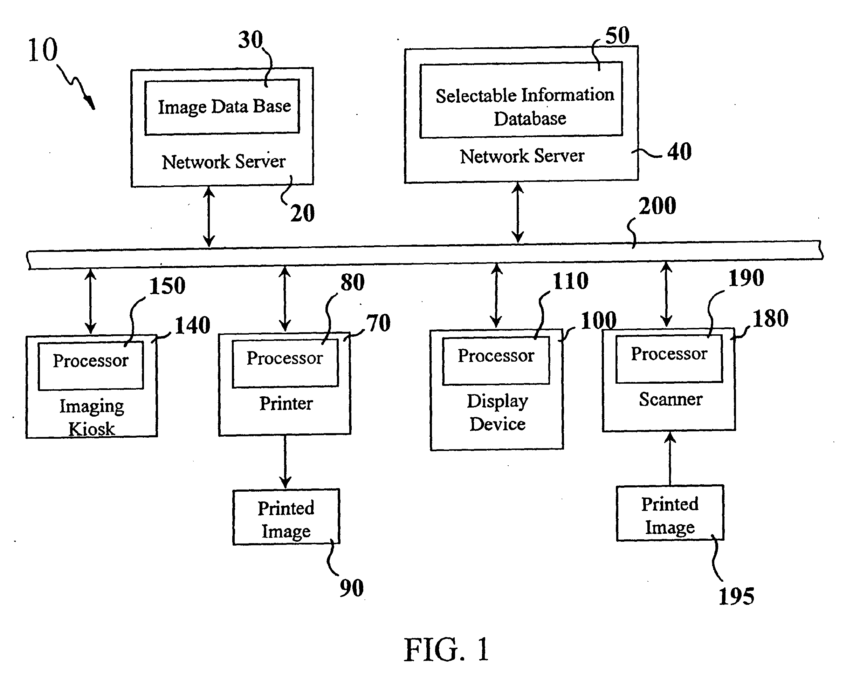

FIG. 1 illustrates a system for managing, distributing, and embedding selectable information in digital images at different imaging devices in accordance with the present invention.

This invention relates to a method for embedding information in a digital image by an imaging device. In this disclosure, the term imaging device can include any devices that can form a visual image, for example, a display device, a printer, or a projector. A display device can be, for example, a liquid crystal device (LCD), a cathode ray tub monitor (CRT), or an organic light emitting diode display (OLED). The monitor can be self-standing or hand held. A projector projects a static image or motion images on a screen, which are exemplified by a LCD light valve or digital mirror technologies. A printer can be an ink jet printer, a thermal resistive printer, a laser (electrophotographic) printer, a digital silver halide printer, or an offset printer. The imaging device can also include a compact disc (CD) writer for recording the digital image on a recordable CD such as a digital versatile disc (DVD) and versatile compact disc (VCD). In the present invention, the term imaging service refers to common operations that can be provided by the imaging devices described above. For example, the imaging services can include well know image processing operations, displaying, printing, scanning of visual images, and so forth.

FIG. 1 illustrates an image authentication system 10 for providing embedding selectable information in digital images and producing visual images using such digital images in accordance with the present invention. The image authentication system 10 includes a first network server 20 having an image database 30, a second network server 40 having a selectable information database 50, a printer 70 having a processor 80 for producing printed image 90, a display device 100 having a processor 110, and an imaging kiosk 140 having a processor 150. The image authentication system 10 can also include a scanner 180 having a processor 190. The scanner 180 scans a printed image 195 and produces a digital image to be processed by the processor 190 which can be subsequently stored or used to produce visual image.

The imaging devices described above produce visual images in response to the request of the users. The visual image can be produced by displaying on a monitor or by printing on a reflective or transparent receiver such as paper or synthetic material. The user can select at least one property for producing such visual images. For the printer 70, for example, the selectable image properties includes image size, the number of the visual images, the properties of the imaging device including the printer type, the printing resolution, the properties of the colorants, the receiver type, and the print finish. The selectable properties can also include imaging processing operations for enhancing the features or the quality of the visual images. The image processing operations include adjusting tone scale, adjusting color balance, adjusting color saturation, reducing red-eye, sharpening of softening the image, reducing blur, cropping, zooming, inserting the digital image into an image template, adding text or annotation into the image, and retouching the image.

The imaging devices can be located adjacent to each other or installed at different locations such as shopping malls, airports or train stations, movie cinema, entertainment parks, or supermarkets so that users can easily access to imaging service at their convenience. The imaging devices are in electronic communication with the first network server 30 and the second network server 40. The first network server 30 is installed at a first service provider that provides the digital images that are used at various imaging devices. The second network server 40 having the selectable information database 50 is installed at a second service provider. The second service provider stores and manages the selectable information, distributes information to imaging devices so that the selectable information can be embedded in digital and visual images at the imaging devices. The second network server sends selectable information to each imaging device and such selectable information can be specific to each imaging service. In some applications, the first and the second service providers can be the same. In such a case, the selectable information database 50 and the image data base 30 can be located on the same network server 20 or 40. In the other applications, the first and the second service providers are different. Proper payment structure needs to be set up. The first service provider uses the service from the second service provided for selecting selectable information and embedding such information in digital images at the imaging devices. The first service provider can pay a fixed fee to the second service provider for a fixed period of time, or pay for embedding information for each imaging service. The price information can also be included as part of the image access information as described below. Payment can be made by a user providing a payment identifier which specifies an account, such as a credit card, from which payment is to be made. A user enters a payment identifier and makes payment for the services that have been provided.

A communication channel 200 electronically connects the network servers 20 and 40, the printer 70, the display device 100, the imaging kiosk 140, and the scanner 180 for providing communication between these devices. The communication channel 200 can exist in different physical and software forms. For example, the communication channel 200 can include an Internet or a local network. They can be built with an optical-fiber cable, a co-axial cable, telephone line, satellite transmission system, and wireless radio-wave transmission. The communication over the communication channel 200 can use different protocols such as the World Wide Web, and file transfer protocol (FTP).

For certain applications, it is beneficial to provide imaging service from a central location, which may be in the vicinity of the first and second network servers 20 and 40. For example, an offset printer can be provided at a central location where a large number of printed images can be made. The requests can be entered by the users from home or the distributed imaging devices. The user requests are sent to the first and the second network servers 20 and 40. The network servers then allocate the printing jobs to the offset printer. The printed images 90 can be mailed to the user designated addresses. The printed images can be photographs, tickets, postal stamps, or product packages.

In all above situations, the present invention provides embedding of selectable information in the digital images. Such embedded information can include copyright information. Such information can also include how the image is produced (capture or creation date, the type of capturing device used), the event that the image is associated with (graduation, birthday party and so forth.), and image calibration parameters (tone and color calibration). As described below, the embedded information is selectable specific to how and when the visual image is produced. The information embedded can specify the user, the imaging device, the location, and the time related to producing the digital image, or the formation of the visual image at the imaging devices. The embedding of the selectable information can be implemented at the imaging devices or by a different computer such as the Network server 20.

In accordance with the present invention, the digital images stored on the image database 30 can already include previously embedded information. The previously embedded information can include, for example, image-access information or authorization information. The authorization information is used for permitting a user to produce a visual image at an imaging device. The authorization information permits the use with and without charge of the digital image for forming a visual image on an imaging device. The authorization information may also prohibit the use of the digital image for certain applications. The authorization information can also authorize the operation of a device. For example, the authorization information can authorize the copying operation of a compact disc writer to copy the digital image files from a memory to a recordable disc. The authorization information can authorize the use of a software stored in an imaging device or a computer.

The image-access information can also include information about the receiver of payment for the imaging services using these digital images. An example of the receiver of payment is the first service provider for the imaging services. The image-access information can also include the web address (URL), or e-mail address of the receiver of the payment such as the service provider. In the present invention, an image service can include capturing, processing, printing, copying, scanning, and reproducing of images in an electronic device or to or from a receiver.

The image-access information can also include features for forming the visual image to be produced on a receiver or a monitor. For example, the imaging programs can include adjusting tone scale, adjusting color balance, adjusting color saturation, reducing red-eye, sharpening of softening the image, reducing blur, cropping, zooming, inserting the digital image into an image template, adding text into the image, and retouching the image. The image-access information can also include image size and the number of the visual images to be produced, and properties of the imaging device such as the printer or the scanner type, the printing resolution, the properties of the colorants, the receiver type, and the type of print finish. These device properties often determine the quality of the visual images as well as the cost to the service provider. The payment for the imaging service can depend on these above described features and properties.

For providing imaging services to the user at an imaging device such as the printer 70, the display device 100, imaging kiosk 140 or a scanner 180, the imaging device receives digital images from the image database 30. Image-access information is embedded in the digital image. After the digital images are received, the embedded image-access information is extracted from the digital images, as described below, in the processors 70, 100, 140, 180 that are located within or near each of the imaging devices.

If the digital image received by the imaging device is previously embedded with information such as the image access information, the previously embedded information can be either removed or kept in the digital image after the previously embedded information is extracted in accordance with the present invention. The previously embedded information in the digital image can be removed. Since such removal of previously embedded information can be made lossless, the digital image is thus free of the noise related to the previously embedded information. The noise level in the digital image can be reduced. The previously embedded information in the digital image can also be kept and the additional selectable information is further embedded at the imaging devices. The resulted digital image has then both the previously embedded information and the further embedded selectable information at the imaging device, which can subsequently used to produce visual images on the display or a printer.

Composite images can be formed at the imaging devices such as the printer 70, the imaging kiosk 140 and display device 100. The digital image sent from the image database 30 to the imaging devices (70,100,140) can be used as an image object that is a part of the composite image. For example, the digital image may include the face image of a person. It can be combined with a frame or theme image or annotation to form a composite image. The image object from the digital image sent from the image database 30 can contain previously embedded information as described above. The new composite image can contain selectable information embedded for the particular imaging service at the imaging device. The composite images can be used to produce visual images. This way, the history of the visual images and digital images can be traced be by detecting the existence of the previously embedded information and the newly embedded selectable information. As described above, the previously stored information can be related to copyright, image access, and capture information, (calibration information), which can be generally related to the service provider or can be specific to the use of each digital image. The embedded selectable information specifies each particular imaging service, for example, the information about the user, the identity of the imaging device, the location and the time when the digital image is embedded with the selectable information or when a visual image is produced from the digital image. The selectable information is selected for each imaging service. The selection can be made by the service provider, or the user, and can be automated by the processors 70, 100, 140, 180.

The embedding of the selected selectable information will now be described. A digital image I(x,y) is stored in image database 30. It will be understood that the digital image can include previously embedded information so this process produces a digital image having first and second embedded information. The selected selectable information is embedded into the digital image I(x,y) by modifying the pixel values in I(x,y) to produce a modified digital image I'(x,y) having the embedded selected selectable information. The selected selectable information can be encrypted before embedding.

The embedding of the selected selectable information starts with producing a message image M(x, y). The message image M(x,y) can include alphanumeric or graphic information associated with the selected selectable information. A carrier image C(x,y) is also generated with a uniform or flat Fourier amplitude spectrum and a phase spectrum generated using a random number generator for each phase component. The random phase is required to distribute the message image to make the message invisible and unreadable to unaided human eyes.

The message image M(x,y) and the carrier image C(x,y) are then convolved to form a distributed signal S(x,y).

$$S(x,y) = M(x,y)*C(x,y) \qquad (1)$$

In eqn. (1), the symbol "*" denotes the mathematical operation of convolution, for example, a circular convolution.

The distributed signal S(x,y) is next added to the digital image I(x,y) to produce a modified digital image I'(x,y) carrying the embedded information:

$$I'(x,y) = I(x,y) + \alpha S(x,y) \qquad (2)$$

The distributed signal S(x,y) is scaled by a scale factor $\alpha$ to maximize the signal of the embedded selected selectable information while ensuring the invisibility of the distributed message in the modified digital image I'(x,y). That is, the value of $\alpha$ can also be chosen for optimizing image quality.

The reliability of extracting the embedded information can be improved by superimposing a plurality of blocks of distributed signals S(x,y) to each color plane of the processed digital image I(x,y). Each of the blocks can be, for example, 64 x 64, 128 x 128, or 256 x 256 pixels in size. For a 300 dpi or 600 dpi printer, these blocks represent a small area (smaller than 1 square inch) on the printed identification document. The redundancy in the distributed signals S(x,y) increases the signal-to-noise ratio in the extraction of embedded information from modified digital image I'(x,y). In the present invention, the term extracting is used to refer the action of retrieving information from an image or visual textual information.

The modified digital image I'(x,y) is transferred via the communication channel 200 to an imaging device such as the printer 70. The selected selectable information is extracted from the modified digital image I'(x,y) in the processors 70, 100, 150, 180. The extraction of the embedded selected selectable information from the modified image I'(x,y) involves cross-correlating I'(x,y) with the carrier image C(x,y) to obtain the message image M(x,y). If the selected selectable information is encrypted, the selected selectable information is subsequently decrypted from the extracted information by the processors 70, 100, 150, 180 at the imaging devices.

Before the visual image is finalized, the user can preview the improved (that is processed or modified) image on a monitor. The user can order the final visual image such as the number or the size of the visual images according to her satisfaction with the preview image. After the order is made for the imaging service, the proper charge is debited from the user's account to the receiver of the payment based on the selected image property. The visual image having the image property is subsequently produced on or by the imaging device.

The selectable information can be embedded into the digital image at the first network server 20 before the digital image having the embedded selectable information is sent to an imaging device. Or alternatively, an imaging device receives a digital image from the first network server 20 and selected selectable information from the second network server 40. The selected selectable information can be encrypted before being transferred over the communication channel 200. The selectable information is subsequently embedded into the digital image at that imaging device.

The digital image having the embedded selected selectable information can be written on to a CD by a CD writer or stored in a memory. The digital image having the embedded selected selectable information can be viewed on a display or printed by a printer to produce a visual image. Preferably, the embedded selected selectable information is invisible to unaided human eyes in such a visual image.

The embedded selected selectable information in the digital image or the visual image herein produced can subsequently be extracted from the digital image I'(x,y) or after printing scanning then extract. The extracted selectable information can be used for identification and authentication of the digital or visual images or for tracking or tracing illicit use.

The data embedding technique disclosed in US-A-5,636,292 is also compatible with the present invention. The disclosures in these references are hereby incorporated in regard to embedding and extracting selected selectable information in the digital images stored in the image database 30.

A computer program product may include one or more storage medium having instructions for causing a computer to perform the method of the present invention. For example, the computer program product can include magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for practicing a method according to the present invention. The computer program can be stored on a storage medium in or connected to the imaging device or in one or more of the network servers.

## PARTS LIST

| | |
|---|---|
| 10 | image authentication system |
| 20 | first network server |
| 30 | image database |
| 40 | second network server |
| 50 | selectable information database |
| 70 | printer |
| 80 | processor |
| 90 | printed image |
| 100 | display device |
| 110 | processor |
| 140 | kiosk |
| 150 | processor |
| 180 | scanner |
| 190 | processor |
| 195 | printed image |
| 200 | communication channel |

## Claims

1. A method for embedding selectable information in a digital image by an imaging device, comprising the steps of:

    a) storing a digital image and selectable information in an electronic memory at a network server;
    b) selecting information from the selectable information;
    c) sending the digital image and the selected selectable information from the network server to the imaging device; and
    d) using the imaging device to embed the selected selectable information in the digital image.

2. The method of claim 1 wherein a user selects the selectable information.

3. The method of claim 1 wherein each network server is connected to a plurality of imaging devices and the network server sends different selectable information to each imaging device.

4. The method of claim 1 wherein the step of embedding includes modifying a predetermined number of pixel values of pixels in the digital image in response to the selected selectable information.

5. The method of claim 1 wherein the embedded selected selectable information in the digital image can subsequently be extracted.

6. The method of claim 1 wherein the digital image having the embedded selected selectable information is produced by a CD writer.

7. A method for embedding selectable information in a digital image by an imaging device that is electronically connected to a network server, comprising the steps of:

    a) storing a digital image and selectable information in an electronic memory at a network server;
    b) selecting information from the selectable information;
    c) producing a plurality of selectable information which specifies the user, the imaging device, the location, and the time related to producing the digital image;
    d) selecting the selectable information; and
    e) using the imaging device to embed the selected selectable information in the digital image.

8. A method for embedding selectable information in a digital image by an imaging device, comprising the steps of:

    a) storing a digital image and selectable information in an electronic memory at a network server;
    b) selecting information from the selectable information;
    c) selecting the selectable information;
    d) sending the digital image and the selected selectable information to the imaging device;
    e) using the imaging device to embed the selected selectable information in the digital image; and
    f) making payment for embedding the selectable information.

9. A method for embedding information in a digital image by an imaging device that is electronically connected to a network server, comprising the steps of:

    a) storing a digital image having first embedded information in an electronic memory at a network server;
    b) sending the digital image having the first embedded information from the network server to the imaging device;
    c) producing second information; and
    d) using the imaging device to embed the second information in the digital image having the first embedded information to produce a digital image having the first and second embedded information.

10. A method for embedding information in a digital image by an imaging device that is electronically connected to a network server, comprising the steps of:

    a) storing a digital image having first embedded information in an electronic memory at a network server;
    b) sending the digital image having the first embedded information from the network server to the imaging device;
    c) removing the first embedded information from the digital image to produce a digital image without the first embedded information;
    d) producing second information; and
    e) using the imaging device to embed the second information in the digital image without the first embedded information to produce a digital image having the second embedded information.

FIG. 1